# EUROPÄISCHE PATENTSCHRIFT

(11) **EP 1 738 063 B1**
(45) Veröffentlichungstag und Bekanntmachung des Hinweises auf die Patenterteilung: **11.11.2009**
(21) Anmeldenummer: 05729059.5
(22) Anmeldetag: 15.03.2005
(51) Int. Cl.: F02B 27/02, F02M 35/116

(54) **SAUGANLAGE FÜR EINE BRENNKRAFTMASCHINE**
INLET SYSTEM FOR AN INTERNAL COMBUSTION ENGINE
SYSTEME D'ADMISSION POUR UN MOTEUR A COMBUSTION INTERNE

(30) Priorität: 30.03.2004 DE 102004015339
(43) Veröffentlichungstag der Anmeldung: 03.01.2007
(73) Patentinhaber: Dr. Ing. h.c. F. Porsche Aktiengesellschaft, 70435 Stuttgart (DE)
(72) Erfinder: RUTSCHMANN, Erwin, 75233 Tiefenbronn (DE); BENZ, Matthias, 71739 Oberriexingen (DE)
(86) Internationale Anmeldenummer: PCT/EP2005/002725
(87) Internationale Veröffentlichungsnummer: WO 2005/098215

(56) Entgegenhaltungen:
- EP-A- 0 402 091
- EP-A- 1 136 674
- DE-A1- 19 842 724
- DE-U1- 20 113 496

## Beschreibung

Die Erfindung betrifft eine Sauganlage für eine Brennkraftmaschine gemäß den Merkmalen des Oberbegriffs des Patentanspruchs 1, wie z.B. in DE 19842724.

Sauganlagen mit Resonanz-Aufladung zur optimalen Füllung der Zylinder bei unterschiedlichen Drehzahlen bzw. Lastbereichen sind aus dem Stand der Technik bekannt. So ist bei der Anmelderin eine Sauganlage in Serie (siehe z.B. DE 201 13 496 U1), bei der die für die beiden Zylinderreihen vorgesehenen Ansaugkrümmer über ein Verteiler - und ein Resonanzrohr miteinander verbunden sind. Über das Verteilerrohr werden die Zylinder mit Verbrennungsluft versorgt, während das mit einer Schaltklappe versehene Resonanzrohr auf bekannte Art und Weise der Anpassung der Eigenfrequenz an die Ansaugfrequenz dient.

Aufgabe der Erfindung ist es, die strömungstechnischen und gasdynamischen Eigenschaften der gattungsgemäßen Sauganlage zu verbessern.

Die Aufgabe wird durch die im Anspruch 1 angegebenen Merkmale gelöst.

Mit der Integration des Resonanzrohres im Verteilerrohr kann die Schwingweg-Gleichverteilung der Sauganlage verbessert und zum anderen die Innenströmung sowie die Vorsaugstreckeneinströmung in das Verteilerrohr entdrosselt werden, was zu einer entsprechenden Leistungssteigerung des Motors führt. Durch die Ausbildung beider Bauteile in einem gemeinsamen Ansaugmodul verringert sich der Bauteileaufwand, so dass eine kompakte Sauganlage darstellbar ist.

Durch die in den Unteransprüchen aufgeführten Maßnahmen sind weitere vorteilhafte Ausgestaltungen und Weiterbildungen der Sauganlage möglich.

Eine besonders vorteilhafte konstruktive Ausführung des Ansaugmoduls ist gewährleistet, wenn es im Querschnitt ovalförmig ausgebildet ist, während das im Ansaugmodul integrierte Resonanzrohr im Querschnitt im wesentlichen kreisförmig ausgebildet ist. Das Ansaugmodul ist dabei im Querschnitt so dimensioniert, dass einerseits das Resonanzrohr Aufnahme findet und andererseits seitlich neben dem Resonanzrohr genügend Bauraum für die Bildung des Verteilerkanals verbleibt.

Eine vorteilhafte fertigungstechnische und dem Integrationsgedanken förderliche Ausführung ergibt sich, wenn auch ein Teil der Mantelfläche des Resonanzrohres durch die Gehäusewand des Ansaugmoduls selbst gebildet ist.

Damit die angesaugte Luft ungehindert über die Einzelrohre zu den Zylindern gelangen kann, ist der den Verbindungskanal und den Resonanzkanal trennende Wandungsabschnitt des Resonanzrohres an seinen beiden Stirnseiten abgeschrägt.

Die Gehäusewand des Ansaugmoduls weist im Bereich des Resonanzrohres eine Öffnung auf, in der modulartig das Gehäuse der Resonanzklappe eingeschoben und befestigt ist.

Die Sauganlage besteht im wesentlichen aus dem das Verteiler- und Resonanzrohr bildenden Ansaugmodul, an dessen beiden Stirnseiten jeweils ein Ansaugkrümmer befestigt ist; alle drei Komponenten sind dabei vorzugsweise aus Kunststoff ausgeführt

Ein Ausführungsbeispiel der Erfindung ist in der nachfolgenden Beschreibung und Zeichnung näher erläutert.

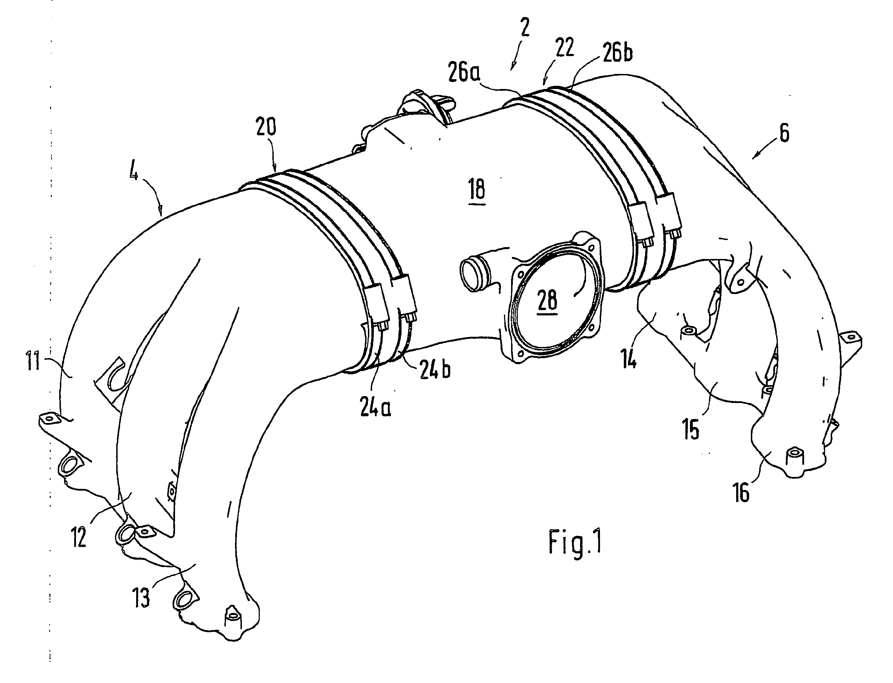

Es zeigen
- Fig. 1: eine Gesamtansicht einer Sauganlage,
- Fig. 2: eine Perspektivansicht eines Ansaugmoduls der Sauganlage,
- Fig. 3: eine Seitenansicht-des Ansaugmoduls,
- Fig. 4: eine weitere Perspektivansicht des Ansaugmoduls,

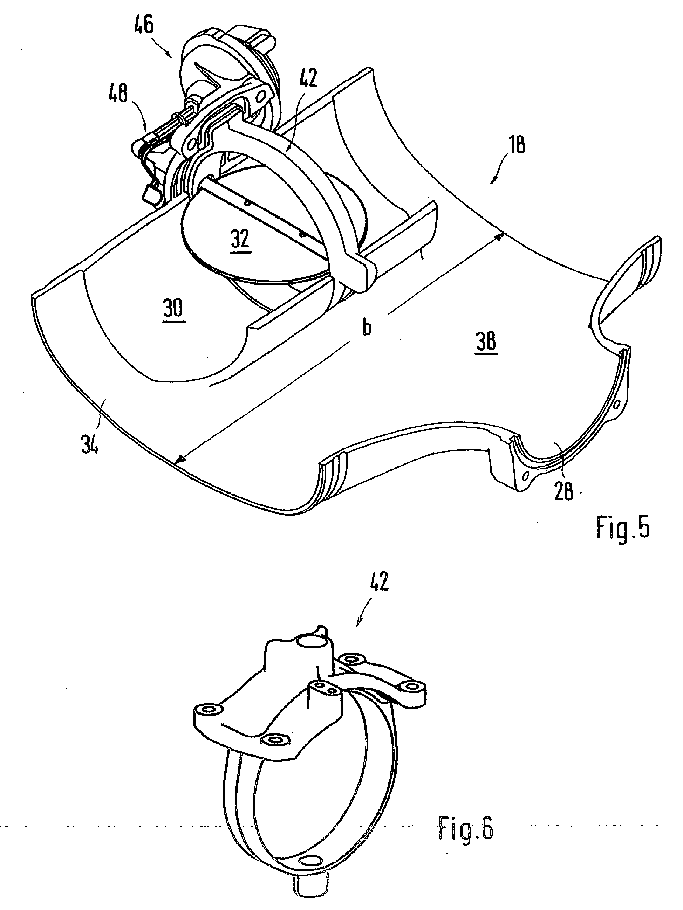

- Fig. 5: das aufgeschnittene Ansaugmodul in perspektivischer Ansicht und
- Fig. 6: eine Perspektivansicht eines Resonanzklappengehäuses.

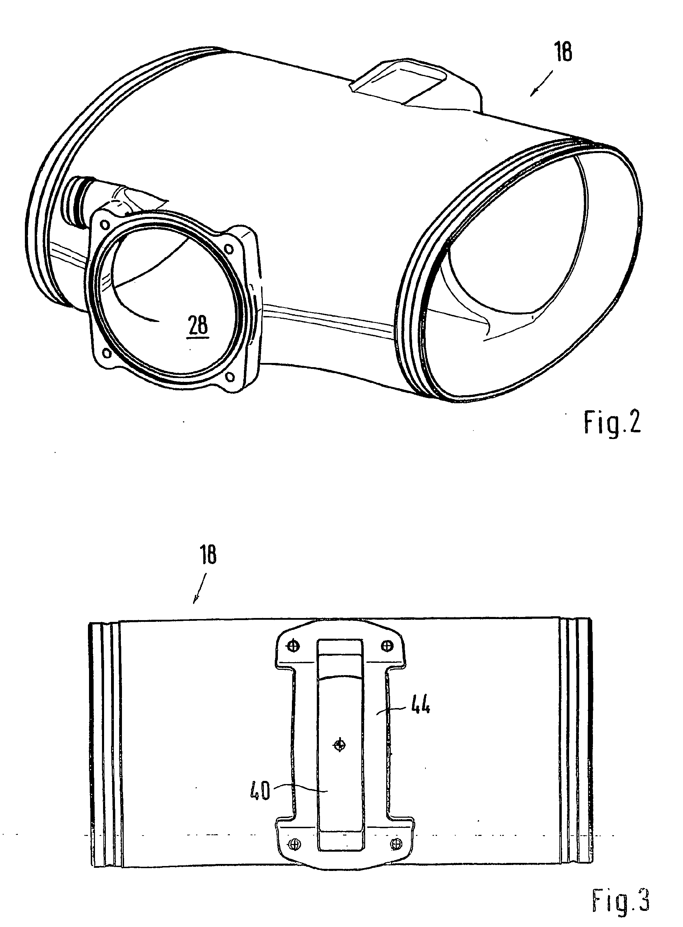

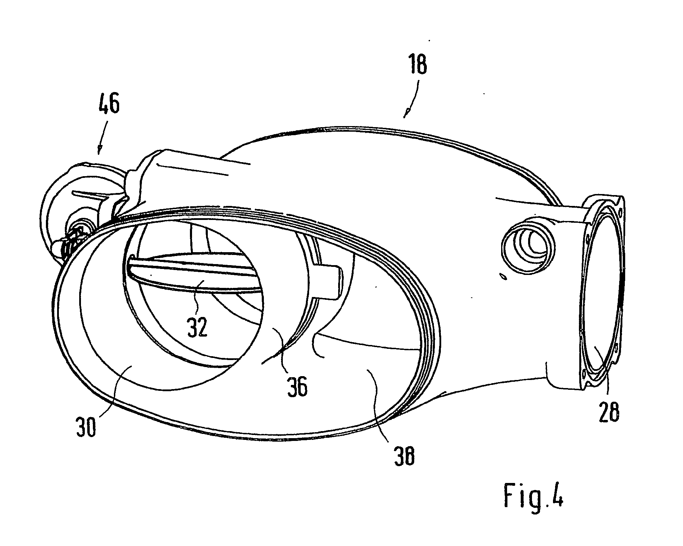

Die für einen 6-Zylinder-Boxermotor ausgebildete Sauganlage 2 weist für jede Zylinderreihe einen Ansaugkrümmer 4 und 6 mit Einzel- Ansaugrohren 11 bis 13 bzw. 14 bis 16 auf, die zu jeweils einem nicht dargestellten Zylinderkopf führen. Beide Ansaugkrümmer 4 und 6 sind an ein zentrales Ansaugmodul 18 angeschlossen. Die Anbindung erfolgt im vorliegenden Ausführungsbeispiel mit Hilfe jeweils einer Gummimuffe 20 und 22, die jeweils mit zwei Bandschellen 24a, 24b und 26a, 26b gesichert ist. Wie insbesondere aus Fig. 2 und 4 ersichtlich, ist das Ansaugmodul 18 ovalförmig bzw. elliptisch ausgebildet und weist in seiner Mantelfläche einen Anschlussstutzen 28 für ein nicht dargestelltes Schaltklappengehäuse auf. Im Innenraum des Ansaugmoduls 18 ist ein Resonanzrohr 30 integriert, dessen Strömungskanal durch eine Schaltklappe 32 überwacht ist. Das Resonanzrohr 30 ist einstückig aus der Gehäusewand 34 des Ansaugmoduls 18 herausgebildet, wobei ein Wandungsabschnitt 36 des Resonanzrohres 30 den Innenraum des Ansaugmoduls 18 entsprechend unterteilt. Die Größe des Innenraumes des Ansaugmoduls 18 und des Resonanzrohres 30 sind dabei so dimensioniert, dass seitlich neben dem Resonanzrohr 30 ein Verteilerraum 38 (Verteilerrohr) verbleibt, der durch die Gehäusewandungen des Ansaugmoduls 18 und den Wandungsabschnitt 36 des Resonanzrohres 30 gebildet ist und über den die Verbrennungsluft den einzelnen Zylindern zugeführt wird. Damit die Ansaugluft auch zu den mittleren Einzelrohren 12 und 15 bzw. den hinteren Einzelrohren 11 und 14 gelangen kann, ist der Wandungsabschnitt 36 an seinen beiden Stirnseiten abgeschrägt und in seiner Längserstreckung kürzer ausgebildet als die Breite b des Verteilerraumes 38.

Auf der dem Anschlussstutzen 28 gegenüberliegenden Seite des Ansaugmoduls 18 ist eine rechteckförmige Öffnung 40 eingebracht, in die ein Resonanzklappengehäuse 42 eingeschoben und an einem Flansch 44 befestigt ist. Im Resonanzklappengehäuse 42 ist dabei die den Strömungskanal überwachende Schaltklappe 32 gelagert. Die Schaltklappe 32 ist dabei unterdruckgesteuert; dazu ist eine am Ansaugmodul 18 befestigte Unterdruckdose 46 vorgesehen, die über ein Gestänge 48 mit der Schaltklappe 32 verbunden ist.

Die Resonanz-Sauganlage funktioniert dabei auf bekannte Art und Weise. In einem unteren und mittleren Drehzahlbereich, vorzugsweise zwischen 2.000 und 5.000 U/min ist die im Resonanzrohr 30 angeordnete Schaltklappe 32 geschlossen, während in einem oberen Drehzahlbereich, z.B. zwischen 5.000 und 7.000 U/min die Schaltklappe 32 geöffnet ist, so dass wiederum die Eigenfrequenz der Sauganlage für die optimale Füllung der Zylinder entsprechend angepasst ist.

## Patentansprüche

1. Sauganlage für eine Brennkraftmaschine mit
- mindestens zwei Zylinderbankreihen, denen jeweils ein Ansaugkrümmer (4, 6) mit zu den Zylindern führenden Einzelrohren (11 bis 13 bzw. 14 bis 16) zugeordnet ist, wobei
- die Ansaugkrümmer (4, 6) über ein Verteilerrohr und mindestens ein mit einer Schaltklappe (32) versehenes Resonanzrohr (30) strömungstechnisch miteinander in Verbindung stehen, und
- das Resonanz- (30) und Verteilerrohr zu einem zentralen die Ansaugkrümmer (4, 6) miteinander verbindenden Ansaugmodul (18) zusammengefasst sind,
**dadurch gekennzeichnet, dass**
- das Resonanzrohr (30) im Innenraum des Ansaugmoduls (18) gegenüber einem Anschlussstutzen (28) positioniert ist, und
- ein Wandungsabschnitt (36) des Resonanzrohres (30) in seiner Längserstreckung kürzer ausgebildet als eine Breite (b) des Verteilerraumes (38) ist, wobei
- die Größe des Innenraums des Ansaugmoduls (18) und des Resonanzrohres (30) derart dimensioniert sind, dass ein verbleibender Raum neben dem Resonanzrohr (30) als Verteilerraum (38) verwendbar ist.

2. Sauganlage nach Anspruch 1, **dadurch gekennzeichnet, dass** das mit einem Anschluss (28) für ein Drosselklappengehäuse versehene Ansaugmodul (18) im Querschnitt ovalförmig ausgebildet ist, während das darin integrierte Resonanzrohr (30) im Querschnitt im wesentlichen kreisförmig ausgebildet ist.

3. Sauganlage nach Anspruch 1 oder 2, **dadurch gekennzeichnet, dass** ein Teil der Mantelfläche des Resonanzrohres (30) durch die Gehäusewand (34) des Ansaugmoduls (18) gebildet ist.

4. Sauganlage nach Anspruch 3, **dadurch gekennzeichnet, dass** der im Innenraum des Ansaugmoduls (18) ausgebildete Wandungsabschnitt (36) des Resonanzrohres (30) an seinen beiden Stirnseiten abgeschrägt ist.

5. Sauganlage nach einem der vorhergehenden Ansprüche, **dadurch gekennzeichnet, dass** die Gehäusewand (34) des Ansaugmoduls (18) im Bereich des Resonanzrohres (30) eine Öffnung (40) aufweist, in die ein Resonanzklappengehäuse (42) eingeschoben und befestigt ist.

## Claims

1. Suction system for an internal combustion engine, with
- at least two cylinder bank rows, each of which is assigned an intake manifold (4, 6) with individual pipes (11 to 13 and 14 to 16) leading to the cylinders,
- the intake manifolds (4, 6) being flow-connected to one another via a distributor pipe and at least one resonant pipe (30) provided with a switch flap (32), and
- the resonant pipe (30) and the distributor pipe being combined into one central intake module (18) connecting the intake manifolds (4, 6) to one another,
**characterized in that**
- the resonant pipe (30) is positioned, in the inner space of the intake module (18), opposite to a connection piece (28), and
- a wall portion (36) of the resonant pipe (30) is designed to be shorter in its longitudinal extent than a width (b) of the distributor space (38),
- the size of the inner space of the intake module (18) and of the resonant pipe (30) being dimensioned in such a way that a remaining space next to the resonant pipe (30) can be used as a distributor space (38).

2. Suction system according to Claim 1, **characterized in that** the intake module (18) provided with a connection (28) for a throttle-valve housing is of oval-shaped design in cross section, while the resonant pipe (30) integrated therein is designed with an essentially circular cross section.

3. Suction system according to Claim 1 or 2, **characterized in that** part of the surface area of the resonant pipe (30) is formed by the housing wall (34) of the intake module (18).

4. Suction system according to Claim 3, **characterized in that that** wall portion (36) of the resonant pipe (30) which is formed in the inner space of the intake module (18) is bevelled on its two end faces.

5. Suction system according to one of the preceding claims, **characterized in that** the housing wall (34) of the intake module (18) has in the region of the resonant pipe (30) an orifice (40) into which a resonant flap housing (42) is pushed and fastened.

## Revendications

1. Système d'admission pour un moteur à combustion interne, comprenant
- au moins deux rangées de cylindres, auxquelles est associé à chaque fois un collecteur d'admission (4, 6) avec des tubes individuels (11 à 13 ou 14 à 16) conduisant aux cylindres,
- les collecteurs d'admission (4, 6) étant connectés les uns aux autres par une technique fluidique par le biais d'un tube de distribution et au moins un tube de résonance (30) pourvu d'un volet de commutation (32), et
- le tube de résonance (30) et le tube de distribution étant rassemblés pour former un module d'admission central (18) connectant les collecteurs d'admission (4, 6) les uns aux autres,
**caractérisé en ce que**
- le tube de résonance (30) est positionné dans l'espace interne du module d'admission (18) en face d'une tubulure de raccordement (28), et
- une portion de paroi (36) du tube de résonance (30) est réalisée dans son étendue longitudinale de manière plus courte qu'une largeur (b) de l'espace de distribution (38),
- la taille de l'espace interne du module d'admission (18) et du tube de résonance (30) étant dimensionnées de telle sorte qu'un espace subsistant à côté du tube de résonance (30) puisse être utilisé comme espace de distribution (38).

2. Système d'admission selon la revendication 1, **caractérisé en ce que** le module d'admission (18) pourvu d'un raccord (28) pour un boîtier de clapet d'étranglement est réalisé avec une forme ovale en section transversale, tandis que le tube de résonance (30) intégré dans celui-ci est réalisé avec une forme sensiblement circulaire en section transversale.

3. Système d'admission selon la revendication 1 ou 2, **caractérisé en ce qu'**une partie de la surface d'enveloppe du tube de résonance (30) est formée par la paroi du boîtier (34) du module d'admission (18).

4. Système d'admission selon la revendication 3, **caractérisé en ce que** la portion de paroi (36) du tube de résonance (30) réalisée dans l'espace interne du module d'admission (18) est biseautée au niveau de ses deux côtés frontaux.

5. Système d'admission selon l'une quelconque des revendications précédentes, **caractérisé en ce que** la paroi de boîtier (34) du module d'admission (18) présente, dans la région du tube de résonance (30), une ouverture (40) dans laquelle est enfoncé et fixé un boîtier de clapet de résonance (42).
